# EUROPEAN PATENT SPECIFICATION

(11) **EP 2 975 948 B1**
(45) Date of publication and mention of the grant of the patent: **01.02.2017**
(21) Application number: 14711965.5
(22) Date of filing: 20.03.2014
(51) Int. Cl.: A23F 5/16, A23F 5/24

(54) **METHOD FOR PRODUCING ROASTED COFFEE BEANS**
VERFAHREN ZUR HERSTELLUNG VON GERÖSTETEN KAFFEEBOHNEN
PROCÉDÉ DE PRODUCTION DE GRAINS DE CAFÉ TORRÉFIÉS

(30) Priority: 21.03.2013 EP 13160489
(43) Date of publication of application: 27.01.2016
(73) Proprietor: Novozymes A/S, 2880 Bagsvaerd (DK)
(72) Inventor: LYNGLEV, Gitte Budolfsen, DK-2000 Frederiksberg (DK); SCHOESLER, Susanne, DK-4000 Roskilde (DK)
(86) International application number: PCT/EP2014/055627
(87) International publication number: WO 2014/147189

(56) References cited:
- WO-A1-2013/005145
- US-A- 5 019 413
- US-A1- 2004 081 724
- US-A1- 2011 052 758
- DATABASE WPI Week 200811 Thomson Scientific, London, GB; AN 2008-B55648 XP002711210, & JP 2007 282537 A (AJINOMOTO GENERAL FOODS INC) 1 November 2007 (2007-11-01)

## Description

### Reference to sequence listing

This application contains a Sequence Listing in computer readable form. The computer readable form is incorporated herein by reference.

### FIELD OF THE INVENTION

The present invention relates to a method for producing roasted coffee beans which comprises contacting of raw coffee beans with asparaginase.

### BACKGROUND OF THE INVENTION

It is well known that acrylamide formation in heated food products may be reduced by a treatment reducing the amount of asparagine in the food materials, such as by subjecting the food materials to the action of the enzyme asparaginase (see e.g. WO2004/026042).

In unbrewed roasted coffee grounds, concentrations of acrylamide between 45 and 374 ng/g have been measured (Andrzejewski D. et al. "Analysis of Coffee for the Presence of Acrylamide by LC- MS/MS", Journal of Agricultural and Food Chemistry, Vol. 52, No. 7, 2004, pp. 1996-2002).

Asparaginase treatment of coffee beans to reduce acrylamide content in roasted coffee has been disclosed (WO2004/037007; WO2008/151807; WO2013/005145).

Improvement of the quality of coffee beans by treatment of the raw coffee beans with steam at a temperature of 135-140°C has been disclosed (US5,019,413).

US2004/081724 discloses a process wherein Arabica coffee beans are treated with atmospheric pressure steam and asparaginase.

### SUMMARY OF THE INVENTION

The present inventors have found that acrylamide formation in asparaginase treated roasted coffee beans, in particular Robusta coffee beans, can be further reduced by subjecting the coffee beans to a steam treatment prior to the asparaginase treatment.

The invention therefore provides a method for producing roasted coffee beans comprising:
(a) treating raw Robusta coffee beans with steam at a temperature of 105-115°C;
(b) contacting the steam treated raw coffee beans with an asparaginase; and
(c) roasting the asparaginase treated raw coffee beans.

In particular, treatment of the raw coffee beans with steam at a temperature of 105-115°C, followed by asparaginase treatment and roasting results in a low level of acrylamide in the roasted coffee beans as compared to coffee beans which have not been subjected to such treatment.

### DETAILED DESCRIPTION OF THE INVENTION

It is generally recognized that there are two primary commercial coffee species: Arabica coffee beans (from the plant *Coffea arabica*) and Robusta coffee beans (from the plant *Coffea canephora*)*.*

The present invention in a first aspect provides a method for producing roasted coffee beans comprising:
(a) treating raw Robusta coffee beans with steam at a temperature of 105-115°C;
(b) contacting the steam treated raw coffee beans with an asparaginase; and
(c) roasting the asparaginase treated raw coffee beans.

Preferably, in the context of the present invention, Robusta coffee beans are coffee beans from the plant *Coffea canephora.*

In a preferred embodiment, the method is for producing roasted coffee beans having a reduced acrylamide level as compared to roasted coffee beans which have not been subjected to steam treatment followed by contacting with an asparaginase.

Preferably, the acrylamide content of the roasted coffee beans is reduced by at least 25%, more preferably by at least 40%, even more preferably by at least 50%, compared to the acrylamide content of roasted coffee beans which have not been subjected to steam treatment followed by contacting with an asparaginase.

In another preferred embodiment, the method is for producing roasted coffee beans having a reduced acrylamide level as compared to roasted coffee beans obtained in the same way except that they have not been contacted with an asparaginase.

Preferably, the acrylamide content of the roasted coffee beans is reduced by at least 10%, more preferably by at least 25%, such as at least 30%, at least 35%, at least 40%, at least 45% or at least 50%, compared to the acrylamide content of roasted coffee beans obtained in the same way except that they have not been contacted with an asparaginase.

In another preferred embodiment, the method is for producing roasted coffee beans having a reduced acrylamide level as compared to roasted coffee beans obtained in the same way except that they have not been subjected to steam treatment.

Preferably, the acrylamide content of the roasted coffee beans is reduced by at least 10%, more preferably by at least 25%, such as at least 30%, at least 35%, at least 40%, at least 45% or at least 50%, compared to the acrylamide content of roasted coffee beans obtained in the same way except that they have not been subjected to steam treatment.

The coffee beans to be used in the method of the invention are raw coffee beans. Raw coffee beans may also be referred to as green coffee beans or unroasted coffee beans.

In the method of the invention, the raw coffee beans are subjected to a steam treatment. Preferably, the raw coffee beans are treated with saturated steam.

In a preferred embodiment, before or during step (a), the water content of the coffee beans is increased to a level ranging from about 30% w/w to about 45% w/w such as about 35% w/w.

Preferably, the water content of the coffee beans is increased by the steam treatment, i.e., during step (a).

Alternatively, the water content of the coffee beans may be increased by pre-soaking the coffee beans in water, e.g., at a temperature of about 30-80°C such as about 60°C.

In a preferred embodiment, the steam treatment is performed for about 5-60 minutes, preferably for about 10-30 minutes such as for about 15 minutes. Preferably, the steam treatment is performed for about 5-60 minutes after the desired temperature has been obtained, more preferably for about 10-30 minutes such as for about 15 minutes after the desired temperature has been obtained.

The steam treated raw coffee beans are to be contacted with an asparaginase for an appropriate time interval allowing the asparaginase to exert its action.

The time interval for the contacting with the asparaginase depends on various factors. The amount of time needed for the enzyme to react with the asparagine will depend upon factors including, but not limited to, the desired level of asparagine (and thus acrylamide) reduction, the characteristics of the particular coffee beans (e.g., type of beans, composition, particle size), level of debris or remaining pulp, the production process, the asparagine concentration, and the particular asparaginase added. The skilled person will readily be able to determine the contacting time. Preferably, the enzyme is allowed to react for a sufficient amount of time to result in coffee beans wherein the level of asparagine is reduced by at least about 10%, preferably at least about 20%, more preferably at least about 30%, still more preferably at least about 40%, and even more preferably at least about 50%. In general, the longer the enzyme is allowed to react, the greater the level of asparagine reduction and thus the greater the level of acrylamide reduction in the roasted coffee beans.

In a preferred embodiment, the contacting in step (b) is for about 10-240 minutes, preferably for about 30-180 minutes, more preferably for about 45-180 minutes.

The step of allowing a sufficient time for the enzyme to react can be carried out in any suitable manner; for example the asparaginase may be added at one temperature followed by a gradual increase or decrease in temperature.

The contacting with the asparaginase constitutes the asparaginase treatment.

As known in the art, pH and temperature are factors that affect enzymatic activity. One skilled in the art should readily be able to determine optimal conditions of these and other parameters (e.g., water content). In addition, optimal pH and temperature conditions for specific enzymes are typically available in the literature and/or from enzyme suppliers.

The contacting with the asparaginase is to be performed at a temperature where the asparaginase enzyme used is active. The skilled person will readily be able to determine the temperature for the contacting with the asparaginase.

In a preferred embodiment, the contacting in step (b) is performed at a temperature of about 25-75°C, preferably about 50-70°C such as about 60°C.

In another embodiment, a thermostable asparaginase is used and the contacting in step (b) is performed at a higher temperature, e.g., at a temperature of about 75-100°C.

A thermostable enzyme in the context of the present invention may be defined as an asparaginase, which after incubation at 70°C for 10 minutes has a residual activity of at least 75%.

The coffee beans may be contacted with the asparaginase by any method known in the art, such as by spraying, soaking, sprinkling, or dominant bath.

In one embodiment, the coffee beans are contacted with asparaginase by spraying a solution of the asparaginase onto the beans along with gentle agitation of the beans in order to create a uniform application to all the bean surfaces.

In another embodiment, the coffee beans are contacted with asparaginase by soaking the beans in a solution of the asparaginase. A gentle agitation may be applied during the contacting.

The skilled person will be able to determine at which concentration the asparaginase is to be added to the coffee beans.The coffee beans may be contacted with asparaginase at a concentration of about 100-30,000 ASNU/kg coffee beans, preferably about 500-20,000 ASNU/kg coffee beans such as about 3,000 ASNU/kg coffee beans.

After the contacting, the asparaginase may be deactivated by any method known in the art. Deactivating the enzyme may occur through heating, thus the optional deactivation step and roasting the coffee beans may be carried out simultaneously. Heat processing can denature and inactivate the enzyme such that the roasted coffee beans are not subjected to continuing enzymatic activity.

After step (b) and before step (c), the raw coffee beans may be dried. The raw coffee beans may be dried to a water content of about 5-15% w/w, preferably 7-12% w/w. Suitable methods of drying can include freeze drying, belt drying, vacuum drying, oven drying, fluid bed drying, and combinations thereof.

Following the asparaginase treatment and the optional drying, the coffee beans are roasted to form roasted coffee beans. Any suitable process comprising roasting may be used. As used herein, the term "roasting" includes any suitable thermal treatment of coffee beans to create flavors that are indicative of coffee. Suitable roasting techniques can include, but are not limited to, oven roasting, extrusion roasting, steam roasting (e.g., with no post roasting), infrared roasting, microwave roasting, di-electric/induction heating roasting, and combinations thereof.

The coffee beans can be roasted to any desired roast color.The roast colour can be monitored by different equipment, Hunterlab or Colur Test

The coffee beans may optionally be ground. The grinding may be performed at any stage such as before steaming or before or after roasting. Preferably, the grinding is performed after roasting.

The roasted coffee beans can be used as is or can be used to make a variety of roasted coffee products, such as roast and ground coffees, liquid concentrates, instant or powdered coffees, coffee beverages (e.g., hot and cold ready to serve coffees, vended coffees, commercial and at-home brewed coffees, Kahlua TM, lattes, cappuccinos), mixes (e.g., cafe latte mixes), confectionaries (e.g., candy), desserts (e.g., cakes, ice creams, mousses, custards), pastries (e.g., danish, donuts), sauces, and soups (e.g., chili). In one embodiment, the coffee beans are dried, roasted, then ground to form roast and ground coffee.

Coffee beans produced according to the method of the invention may be blended with other coffee beans. E.g., Robusta coffee beans produced according to the invention may be blended with Arabica coffee beans which may or may not have been treated with asparaginase. Such blending may be performed at any stage, e.g., before or after the optional drying, before or after roasting, and/or before or after optional grinding.

In another aspect, the invention provides roasted coffee beans obtainable by a method of the invention as described above.

### Asparaginase

An asparaginase in the context of the present invention means an enzyme having asparaginase activity, i.e., an enzyme that catalyzes the hydrolysis of asparagine to aspartic acid (EC 3.5.1.1).

Asparaginase activity may, e.g., be determined according to the asparaginase activity (ASNU) assay described in the Examples. In one embodiment, an asparaginase to be used in the method of the present invention has at least 20%, e.g., at least 40%, at least 50%, at least 60%, at least 70%, at least 80%, at least 90%, at least 95%, or at least 100% of the asparaginase activity of the mature polypeptide of SEQ ID NO: 1 when measured at pH 7 and at 37°C. The asparaginase activity may be determined per microgram asparaginase enzyme.

The asparaginase may be obtained from any source, e.g., from a microorganism, from a plant or from an animal.

The asparaginase may be obtained from a microorganism of any genus, e.g., from a bacterium, an archaeon or a fungus. For purposes of the present invention, the term "obtained from" as used herein in connection with a given source shall mean that the asparaginase encoded by a polynucleotide is produced by the source or by a strain in which the polynucleotide from the source has been inserted.

It may be a wild type asparaginase, i.e., an asparaginase found in nature, or it may be a variant asparaginase, i.e., an asparaginase comprising an alteration, i.e., a substitution, insertion, and/or deletion, at one or more (e.g., several) positions compared to a parent asparaginase from which it may have been derived. A substitution means replacement of the amino acid occupying a position with a different amino acid; a deletion means removal of the amino acid occupying a position; and an insertion means adding an amino acid adjacent to and immediately following the amino acid occupying a position.

The asparaginase or its parent, preferably the asparaginase, may be a bacterial asparaginase. For example, the asparaginase may be a Gram-positive bacterial asparaginase such as a *Bacillus, Clostridium, Enterococcus, Geobacillus, Lactobacillus, Lactococcus, Oceanobacillus, Staphylococcus, Streptococcus,* or *Streptomyces* asparaginase, or a Gram-negative bacterial asparaginase such as a *Campylobacter, E. coli, Flavobacterium, Fusobacterium, Helicobacter, Ilyobacter, Neisseria, Pseudomonas, Salmonella,* or *Ureaplasma* asparaginase.

In one embodiment, the asparaginase is a *Bacillus alkalophilus, Bacillus amyloliquefaciens, Bacillus brevis, Bacillus circulans, Bacillus clausii, Bacillus coagulans, Bacillus firmus, Bacillus lautus, Bacillus lentus, Bacillus licheniformis, Bacillus megaterium, Bacillus pumilus, Bacillus stearothermophilus, Bacillus subtilis,* or *Bacillus thuringiensis* asparaginase.

In another embodiment, the asparaginase is a *Streptococcus equisimilis, Streptococcus pyogenes, Streptococcus uberis,* or *Streptococcus equi* subsp. *Zooepidemicus* asparaginase.

In another embodiment, the asparaginase is a *Streptomyces achromogenes, Streptomyces avermitilis, Streptomyces coelicolor, Streptomyces griseus,* or *Streptomyces lividans* asparaginase.

In a preferred embodiment, the asparaginase or its parent, preferably the asparaginase, is a fungal asparaginase. For example, the asparaginase may be a yeast asparaginase such as a *Candida, Kluyveromyces, Pichia, Saccharomyces, Schizosaccharomyces,* or *Yarrowia* asparaginase; or a filamentous fungal asparaginase such as an *Acremonium, Agaricus, Alternaria, Aspergillus, Aureobasidium, Botryospaeria, Ceriporiopsis, Chaetomidium, Chrysosporium, Claviceps, Cochliobolus, Coprinopsis, Coptotermes, Corynascus, Cryphonectria, Cryptococcus, Diplodia, Exidia, Filibasidium, Fusarium, Gibberella, Holomastigotoides, Humicola, Irpex, Lentinula, Leptospaeria, Magnaporthe, Melanocarpus, Meripilus, Mucor, Myceliophthora, Neocallimastix, Neurospora, Paecilomyces, Penicillium, Phanerochaete, Piromyces, Poitrasia, Pseudoplectania, Pseudotrichonympha, Rhizomucor, Schizophyllum, Scytalidium, Talaromyces, Thermoascus, Thielavia, Tolypocladium, Trichoderma, Trichophaea, Verticillium, Volvariella,* or *Xylaria* asparaginase.

In one embodiment, the asparaginase is a *Saccharomyces carlsbergensis, Saccharomyces cerevisiae, Saccharomyces diastaticus, Saccharomyces douglasii, Saccharomyces kluyveri, Saccharomyces norbensis,* or *Saccharomyces oviformis* asparaginase.

In another embodiment, the asparaginase is an *Acremonium cellulolyticus, Aspergillus aculeatus, Aspergillus awamori, Aspergillus foetidus, Aspergillus fumigatus, Aspergillus japonicus, Aspergillus nidulans, Aspergillus niger, Aspergillus oryzae, Chrysosporium inops, Chrysosporium keratinophilum, Chrysosporium lucknowense, Chrysosporium merdarium, Chrysosporium pannicola, Chrysosporium queenslandicum, Chrysosporium tropicum, Chrysosporium zonatum, Fusarium bactridioides, Fusarium cerealis, Fusarium crookwellense, Fusarium culmorum, Fusarium graminearum, Fusarium graminum, Fusarium heterosporum, Fusarium negundi, Fusarium oxysporum, Fusarium reticulatum, Fusarium roseum, Fusarium sambucinum, Fusarium sarcochroum, Fusarium sporotrichioides, Fusarium sulphureum, Fusarium torulosum, Fusarium trichothecioides, Fusarium venenatum, Humicola grisea, Humicola insolens, Humicola lanuginosa, Irpex lacteus, Mucor miehei, Myceliophthora thermophila, Neurospora crassa, Penicillium funiculosum, Penicillium purpurogenum, Phanerochaete chrysosporium, Thielavia achromatica, Thielavia albomyces, Thielavia albopilosa, Thielavia australeinsis, Thielavia fimeti, Thielavia microspora, Thielavia ovispora, Thielavia peruviana, Thielavia setosa, Thielavia spededonium, Thielavia subthermophila, Thielavia terrestris, Trichoderma harzianum, Trichoderma koningii, Trichoderma longibrachiatum, Trichoderma reesei,* or *Trichoderma viride* asparaginase.

It will be understood that for the aforementioned species, the invention encompasses both the perfect and imperfect states, and other taxonomic equivalents, e.g., anamorphs, regardless of the species name by which they are known. Those skilled in the art will readily recognize the identity of appropriate equivalents.

Strains of these species are readily accessible to the public in a number of culture collections, such as the American Type Culture Collection (ATCC), Deutsche Sammlung von Mikroorganismen und Zellkulturen GmbH (DSMZ), Centraalbureau Voor Schimmelcultures (CBS), and Agricultural Research Service Patent Culture Collection, Northern Regional Research Center (NRRL).

The asparaginase may be identified and obtained from other sources including microorganisms isolated from nature (e.g., soil, composts, water, etc.) or DNA samples obtained directly from natural materials (e.g., soil, composts, water, etc.). Techniques for isolating microorganisms and DNA directly from natural habitats are well known in the art. A polynucleotide encoding the asparaginase may then be obtained by similarly screening a genomic DNA or cDNA library of another microorganism or mixed DNA sample. Once a polynucleotide encoding an asparaginase has been detected, the polynucleotide can be isolated or cloned by utilizing techniques that are known to those of ordinary skill in the art (see, *e.g.,* Sambrook *et al.,* 1989, *Molecular Cloning, A Laboratory Manual,* 2d edition, Cold Spring Harbor, New York).

In one preferred embodiment, the asparaginase or its parent, preferably the asparaginase, is obtained from *Aspergillus,* e.g., from *Aspergillus aculeatus, Aspergillus awamori, Aspergillus foetidus, Aspergillus fumigatus, Aspergillus japonicus, Aspergillus nidulans, Aspergillus niger, Aspergillus oryzae* or *Aspergillus terreus.*

In another preferred embodiment, the asparaginase or its parent, preferably the asparaginase, is obtained from *Aspergillus oryzae,* e.g., the asparaginase of SEQ ID NO: 1 or the mature polypeptide thereof. In another preferred embodiment, the asparaginase or its parent, preferably the asparaginase, is obtained from *Aspergillus niger,* e.g., the asparaginase of SEQ ID NO: 2 or the mature polypeptide thereof.

In another preferred embodiment, the asparaginase has at least 50% sequence identity to the mature polypeptide of any one of SEQ ID NOs: 1 or 2, such as at least 60%, at least 70%, at least 80%, at least 85%, at least 90%, at least 91%, at least 92%, at least 93%, at least 94%, at least 95%, at least 96%, at least 97%, at least 98% or at least 99% sequence identity to the mature polypeptide of any one of SEQ ID NOs: 1 or 2.

SEQ ID NO: 1 is the amino acid sequence of asparaginase from *Aspergillus oryzae.*

In the context of the present invention, the term "mature polypeptide" means a polypeptide in its final form following translation and any post-translational modifications, such as N-terminal processing, C-terminal truncation, glycosylation, phosphorylation, etc. It is known in the art that a host cell may produce a mixture of two of more different mature polypeptides (i.e., with a different C terminal and/or N terminal amino acid) expressed by the same polynucleotide.

Based on N-terminal sequencing and mass spectrometry (MS) analysis, it seems that N-terminal processing of the asparaginase of SEQ ID NO: 1 is quite heterogeneous. In one embodiment, the mature polypeptide is amino acids 20 to 378 of SEQ ID NO: 1 based on SignalP (Nielsen et al., 1997, Protein Engineering 10: 1-6) that predicts that amino acids 1 to 19 of SEQ ID NO: 1 are a signal peptide.

SEQ ID NO: 2 is the amino acid sequence of asparaginase from Aspergillus niger. In one embodiment, the mature polypeptide of SEQ ID NO: 2 is amino acids 18 to 378 of SEQ ID NO: 2 based on the predicted signal peptide being amino acids 1-17.

For purposes of the present invention, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

### (Identical Residues x 100)/(Length of Alignment - Total Number of Gaps in Alignment)

In another preferred embodiment, the asparaginase is a variant of a parent asparaginase having at least 50% sequence identity to the mature polypeptide of any one of SEQ ID NOs: 1 or 2, such as at least 60%, at least 70%, at least 80%, at least 85%, at least 90%, at least 91%, at least 92%, at least 93%, at least 94%, at least 95%, at least 96%, at least 97%, at least 98% or at least 99% sequence identity to the mature polypeptide of any one of SEQ ID NOs: 1 or 2.

In a more preferred embodiment, the asparaginase is a variant of a parent asparaginase having at least 50% sequence identity to the mature polypeptide of SEQ ID NO: 1, such as at least 60%, at least 70%, at least 80%, at least 85%, at least 90%, at least 91%, at least 92%, at least 93%, at least 94%, at least 95%, at least 96%, at least 97%, at least 98% or at least 99% sequence identity to the mature polypeptide of SEQ ID NO: 1.

In another preferred embodiment, the asparaginase comprises at most 100, preferably at most 80 or at most 50, more preferably at most 25, at most 20, at most 15, at most 10 or at most 5 amino acid differences compared to the mature polypeptide of any one of SEQ ID NOs: 1 or 2.

In another embodiment, the asparaginase is a thermostable asparaginase, e.g., the asparaginase from *Pyrococcus furiosus* disclosed in WO2008/151807.

### EXAMPLES

### Materials and methods

### Asparaginase activity (ASNU) assay

The activity of asparaginase may be measured in ASNU. An asparaginase unit (ASNU) is defined as the amount of enzyme needed to generate 1.0 micromole of ammonia in 1 minute at 37°C and pH 7.0, in 0.1 M MOPS buffer with 9.2 mg/ml asparagine.

Asparaginase hydrolyzes asparagine to aspartic acid and ammonium. The produced ammonium is combined with α-ketoglutarate to form glutamic acid whereby NADH is oxidized to NAD+. The reaction is catalysed by a surplus of glutamate dehydrogenase. The consumption of NADH is measured by photometry at 340 nm. NADH has an absorbance at 340 nm, while NAD+ has no absorbance. A decrease in color is thus measured, and can be correlated to asparaginase activity.

Activity is determined relative to an asparaginase standard of known activity. A commercial product having a declared activity like Acrylaway® may be used as standard.

### Quantification of asparagine and aspartic acid using HPLC

Asparagine and aspartic acid content of samples may be analyzed on a ThermoFisher WPS3000 high pressure liquid chromatography system comprising of a quaternary pump, an auto sampler with temperature control, a column oven and a tunable fluorescence detector.

Samples are analyzed after automated pre-column derivatisation. 30 µL milli-Q water, 10 µL of 0.4 M borate buffer pH 10.2, 2 µL sample, and 2 µL ortho-phthalaldehyde 10 g/L in 0.4 M borate buffer pH 10.2 are collected and mixed by pipetting up and down in a mixing vial; 100 µL milli-Q water is added, and 2 µL is finally injected for chromatographic analysis on an Agilent zorbax eclipse AAA column (4.6 mm by 150 mm, 3.5 µm particle size) with the corresponding guard column.

The pump is set to a constant flow rate of 2 ml/minute, the column is initially equilibrated with 20 mM phosphate buffer pH 7.5 and asparagine is eluted with a linear gradient from 4 minutes to 12 minutes from 0% to 100% of a 45% methanol 45% acetonitrile 10% water mixture. Fluorescence of the asparagine derivative is exited with light at 340 nm and emission is quantified at 450 nm. Samples are analyzed by comparison to standard aspartic acid and asparagine in the concentration range from 0.05 g/l to 0.75 g/L.

### Example 1

### Asparaginase treatment of Robusta coffee beans with and without steaming

### Asparaginase pilot set-up for treatment of Vietnam Robusta beans

### Steaming procedure

In the autoclave used one could only obtain a final water content in the beans of 20% w/w as the water/steam inlet could not be adjusted above this level. Therefore, a pre-soak step was introduced prior to the steaming procedure carried out in the autoclave. However, for the given purpose, more flexible steaming equipment is commercially available in which case the pre-soaking may not be necessary since the water content of the coffee beans may be increased to the desired level by the steam treatment.
Presoak: 5.0 kg Vietnam Robusta beans + up to 2.25 L tap water were gently mixed. Mixing proceeded until all water was absorbed by the beans, approx. 20-30 min.
Steaming: Steaming was carried out by a Systec XV 65 Autoclave, program no. 3, the steaming took place at 110-120°C for 15 min.

### Enzyme treatment and drying

To 5.0 kg beans (original amount), 4.5 L tap water and 0 or 3000 ASNU/kg beans of Acrylaway^{®} CB, L was added under gentle mixing at 60°C for 60-120 minutes. Water and enzyme was added slowly.

After the enzyme treatment, the green coffee beans were dried to about 10% w/w water in a fluid bed with an inlet temperature 60°C and with an air flow of 300m³/h for the first 1.5 h and with an inlet temperature of 50°C and an airflow of 250 m³/h for further 2.5 h.

### Roasting and Acrylamide analysis

125 g of the dried coffee beans from the enzyme effect trial were roasted to LRU color value of 80. Afterwards the beans were analyzed for Acrylamide using LC-MS/MS.

### Results

Initially 5 kgs of green Vietnam Robusta beans were steamed at 110°C at 35% w/w total water content (obtained during pre-soaking and steaming as described above). 0 or 3000 ASNU/kg coffee beans of Acrylaway^{®} CB, L was added and allowed to react for 120 min under gentle mixing. After drying and roasting, the acrylamide mitigation was measured to 38% for the enzyme treated while the control resulted in an acrylamide mitigation of 3%. In both cases the reduction has been compared to the corresponding process control without enzyme.

The time for enzyme treatment was then reduced from 120 min to 60 min; the other parameters were kept constant. The latter resulted in a mitigation of acrylamide content of 33%. Subsequently, testing of increasing the steaming temperature from 110 to 120°C was tested. Surprisingly the acrylamide mitigation now obtained was only 4%.

| | | Steaming temperature - water content | Enzyme ASNU/kg beans | Enzyme reaction time | Acryamide ppb Green beans | Acryamide ppb Roasted beans | AA reduction |
|---|---|---|---|---|---|---|---|
| 1 | Process control | 110°C, 35% water | 0 | 120 min | - | 290 | |
| 2 | Enzyme treated | 110°C, 35% water | 3000 | 120 min | - | 180 | 38% |
| 3 | Process control | No steam | 0 | 120 min | - | 300 | 3% |
| 4 | Enzyme treated | No steam | 3000 | 120 min | - | 290 | |
| 5 | Process control | 110°C, 35% water | 0 | 60 min | <50 | 300 | |
| 6 | Enzyme treated | 110°C, 35% water | 3000 | 60 min | <50 | 200 | 33% |
| 7 | Process control | 120°C, 35% water | 0 | 60 min | 80 | 230 | |
| 8 | Enzyme treated | 120°C, 35% water | 3000 | 60 min | 70 | 220 | 4% |
| 9 | Green beans | No steaming | 0 | soaking | <50 | - | - |
| 10 | Green beans | 110°C, 8% water (as is) | 0 | No soaking | 140 | - | - |

No.s 3 and 4 show that asparaginase treatment without the prior steaming step gives hardly any acrylamide reduction. Comparing no.s 5 and 6 with no.s 7 and 8 show that the steaming temperature is important for the acrylamide mitigation. Comparing the acrylamide level of the green (unroasted) beans for no.s 5 and 6 having a water content of 35% with no. 10 where the steaming is performed on green beans as is having a water content of 8% shows that the water content is important. When green beans having a low water content were steam treated, 140 ppb of acylamide was measured before roasting. The acrylamide formed during the steam treatment will not be reduced by the subsequent asparaginase treatment.

Example 2 (not part of the invention)

### Asparaginase treatment of Arabica coffee beans with and without steaming

Asparaginase treated Arabica beans at 5 g scale were tested with and without the steaming step prior to the enzyme treatment. In this case only asparagine reduction was monitored; however it is well-known that the major precursor for acrylamide mitigation is asparagine.

Unwashed green Arabica coffee beans were obtained from CR3 (CR3 - Kaffeeveredelung M. Hermsen GmbH, Bremen, Germany) in 2010. These were tested at lab scale with and without the asparaginase, Acrylaway^{®} CB, L and with and without steaming.

Portions of 5.0 g unwashed green Arabica coffee beans, with a water content of 6.5% w/w, were steamed for 45 minutes at 100°C in small wire baskets inserted into a steam boiler containing 1 L of boiling deionized water. After steaming the amount of absorbed water was quantitatively determined. The beans were then added to 4.2 ml of heated deionized water (60°C) containing either 0 ASNU of Acrylaway^{®} CB, L/kg or 3000 ASNU/kg of Acrylaway^{®} CB, L. Other 5 g portions of beans were just added to 4.2 ml of heated deionized water (60°C) containing either 0 ASNU of Acrylaway^{®} CB, L/kg or 3000 ASNU/kg of Acrylaway^{®} CB, L. All dosages were tested in four replicates. The samples were incubated at 60°C for 45 minutes with a stirring speed of 20 rpm. After 45-60 minutes water was completely absorbed by the beans.

An amount corresponding to 5 g of the original dry green beans was grinded; hydrochloric acid was added to inactivate the enzyme and for extraction of asparagine. After extraction the beans were filtered and kept at -18°C until further analysis.

Asparagine content was analyzed using a high pressure liquid chromatography system, amino acids were analyzed by pre-column derivatisation and the fluorescence was quantified.

| | **Asparagine** | |
|---|---|---|
| | **mg/kg** | Average mg/kg |
| Blank, no steam | **427** | |
| Blank, no steam | **339** | 407 |
| Blank, no steam | **345** | |
| Blank, no steam | **513** | |
| No steam, Acrylaway 3000 U/kg | **215** | |
| No steam, Acrylaway 3000 U/kg | **101** | 172 |
| No steam, Acrylaway 3000 U/kg | **125** | |
| No steam, Acrylaway 3000 U/kg | **248** | |
| | | |
| Blank, steam 45 min | **463** | |
| Blank, steam 45 min | **514** | 447 |
| Blank, steam 45 min | **415** | |
| Blank, steam 45 min | **398** | |
| Steam 45 min, Acrylaway 3000 U/kg | **124** | |
| Steam 45 min, Acrylaway 3000 U/kg | **109** | |
| Steam 45 min, Acrylaway 3000 U/kg | **76** | 133 |
| Steam 45 min, Acrylaway 3000 U/kg | **223** | |

When using Arabica coffee beans, significant enzyme induced asparagine reduction is observed also without a prior steaming step.

## Claims

1. A method for producing roasted coffee beans comprising:
(a) treating raw Robusta coffee beans with steam at a temperature of 105-115°C;
(b) contacting the steam treated raw coffee beans with an asparaginase; and
(c) roasting the asparaginase treated raw coffee beans.

2. The method of claim 1, wherein before or during step (a), the water content of the coffee beans is increased to a level ranging from about 30% w/w to about 45% w/w such as about 35% w/w.

3. The method of claim 2, wherein the water content of the coffee beans is increased by the steam treatment.

4. The method of any of the preceding claims, wherein step (a) is performed for 5-60 minutes, preferably for 10-30 minutes such as for about 15 minutes.

5. The method of any of the preceding claims, wherein the contacting in step (b) is for 10-240 minutes, preferably for 30-180 minutes, more preferably for 45-180 minutes.

6. The method of any of the preceding claims, wherein step (b) is performed by contacting with an asparaginase at a concentration of 100-30,000 ASNU/kg coffee beans, preferably 500-20,000 ASNU/kg coffee beans such as about 3,000 ASNU/kg coffee beans.

7. The method of any of the preceding claims, wherein after step (b) and before step (c), the raw coffee beans are dried to a water content of 5-15% w/w, preferably 7-12% w/w.

8. The method of any of the preceding claims, wherein the coffee beans are ground after step (c).

9. The method of any of the preceding claims, wherein the asparaginase is obtained from *Aspergillus,* preferably *A. oryzae* or *A. niger,* or is a variant of a parent asparaginase obtained from *Aspergillus,* preferably *A. oryzae* or *A. niger.*

10. The method of any of the preceding claims, wherein the asparaginase comprises at most 100, preferably at most 80 or at most 50, more preferably at most 25, at most 20, at most 15, at most 10 or at most 5 amino acid differences compared to the mature polypeptide of any one of SEQ ID NOs: 1 or 2.

11. The method of any of the preceding claims, wherein the asparaginase has at least 50% sequence identity to the mature polypeptide of any one of SEQ ID NOs: 1 or 2, such as at least 60%, at least 70%, at least 80%, at least 85%, at least 90%, at least 91%, at least 92%, at least 93%, at least 94%, at least 95%, at least 96%, at least 97%, at least 98% or at least 99% sequence identity to the mature polypeptide of any one of SEQ ID NOs: 1 or 2.

12. The method of any of the preceding claims, wherein the asparaginase is a thermostable asparaginase.

## Patentansprüche

1. Verfahren zur Herstellung von gerösteten Kaffeebohnen, das Folgendes umfasst:
(a) Behandeln von rohen Robusta-Kaffeebohnen mit Dampf bei einer Temperatur von 105-115°C;
(b) Kontaktieren der dampfbehandelten rohen Kaffeebohnen mit einer Asparaginase; und
(c) Rösten der asparaginasebehandelten rohen Kaffeebohnen.

2. Verfahren nach Anspruch 1, wobei der Wassergehalt der Kaffeebohnen vor oder während Schritt (a) auf einen Wert im Bereich von ungefähr 30% (w/w) bis ungefähr 45% (w/w), wie ungefähr 35% (w/w), erhöht wird.

3. Verfahren nach Anspruch 2, wobei der Wassergehalt der Kaffeebohnen durch die Dampfbehandlung erhöht wird.

4. Verfahren nach einem der vorhergehenden Ansprüche, wobei Schritt (a) 5-60 Minuten lang, vorzugsweise 10-30 Minuten lang, wie ungefähr 15 Minuten lang, durchgeführt wird.

5. Verfahren nach einem der vorhergehenden Ansprüche, wobei das Kontaktieren in Schritt (b) 10-240 Minuten lang, vorzugsweise 30-180 Minuten lang, stärker bevorzugt 45-180 Minuten lang, erfolgt.

6. Verfahren nach einem der vorhergehenden Ansprüche, wobei Schritt (b) durch Kontaktieren mit einer Asparaginase in einer Konzentration von 100-30 000 ASNU/kg Kaffeebohnen, vorzugsweise 500-20 000 ASNU/kg Kaffeebohnen, wie ungefähr 3 000 ASNU/kg Kaffeebohnen, erfolgt.

7. Verfahren nach einem der vorhergehenden Ansprüche, wobei die rohen Kaffeebohnen nach Schritt (b) und vor Schritt (c) auf einen Wassergehalt von 5-15% (w/w), vorzugsweise 7-12% (w/w), getrocknet werden.

8. Verfahren nach einem der vorhergehenden Ansprüche, wobei die Kaffeebohnen nach Schritt (c) gemahlen werden.

9. Verfahren nach einem der vorhergehenden Ansprüche, wobei die Asparaginase aus *Aspergillus,* vorzugsweise *A. oryzae* oder *A. niger,* stammt oder eine Variante einer Ausgangsasparaginase, die aus *Aspergillus,* vorzugsweise *A. oryzae* oder *A. niger,* stammt, ist.

10. Verfahren nach einem der vorhergehenden Ansprüche, wobei die Asparaginase maximal 100, vorzugsweise maximal 80 oder maximal 50, stärker bevorzugt maximal 25, maximal 20, maximal 15, maximal 10 oder maximal 5 Aminosäureunterschiede im Vergleich zu dem reifen Polypeptid nach einem der SEQ ID NOs: 1 oder 2 umfasst.

11. Verfahren nach einem der vorhergehenden Ansprüche, wobei die Asparaginase mindestens 50% Sequenzidentität zu dem reifen Polypeptid nach einem der SEQ ID NOs: 1 oder 2, wie mindestens 60%, mindestens 70%, mindestens 80%, mindestens 85%, mindestens 90%, mindestens 91%, mindestens 92%, mindestens 93%, mindestens 94%, mindestens 95%, mindestens 96%, mindestens 97%, mindestens 98% oder mindestens 99% Sequenzidentität zu dem reifen Polypeptid nach einem der SEQ ID NOs: 1 oder 2, aufweist.

12. Verfahren nach einem der vorhergehenden Ansprüche, wobei die Asparaginase eine hitzestabile Asparaginase ist.

## Revendications

1. Méthode de production de grains de café torréfiés, comprenant :
(a) le traitement de grains de café Robusta bruts par de la vapeur à une température de 105-115°C ;
(b) la mise en contact des grains de café bruts et traités à la vapeur avec une asparaginase ; et
(c) la torréfaction des grains de café bruts traités par une asparaginase.

2. Méthode selon la revendication 1, dans laquelle, avant ou pendant l'étape (a), la teneur en eau des grains de café est accrue jusqu'à un taux allant d'environ 30% p/p à environ 45% p/p, tel que d'environ 35% p/p.

3. Méthode selon la revendication 2, dans laquelle la teneur en eau des grains de café est accrue par le traitement à la vapeur.

4. Méthode selon l'une quelconque des revendications précédentes, dans laquelle l'étape (a) est effectuée pendant 5-60 minutes, préférablement pendant 10-30 minutes, tel que pendant environ 15 minutes.

5. Méthode selon l'une quelconque des revendications précédentes, dans laquelle la mise en contact dans l'étape (b) est effectuée pendant 10-240 minutes, préférablement pendant 30-180 minutes, plus préférablement pendant 45-180 minutes.

6. Méthode selon l'une quelconque des revendications précédentes, dans laquelle l'étape (b) est effectuée par la mise en contact avec une asparaginase selon une concentration de 100-30 000 ASNU/kg de grains de café, préférablement 500-20 000 ASNU/kg de grains de café, tel que d'environ 3000 ASNU/kg de grains de café.

7. Méthode selon l'une quelconque des revendications précédentes, dans laquelle, après l'étape (b) et avant l'étape (c), les grains de café bruts sont séchés jusqu'à une teneur en eau de 5-15% p/p, préférablement de 7-12% p/p.

8. Méthode selon l'une quelconque des revendications précédentes, dans laquelle les grains de café sont broyés après l'étape (c).

9. Méthode selon l'une quelconque des revendications précédentes, dans laquelle l'asparaginase est obtenue à partir d'*Aspergillus,* préférablement *A. oryzae* ou *A. niger,* ou est un variant d'une asparaginase parente obtenue à partir d'*Aspergillus,* préférablement *A*. *oryzae* ou *A. niger.*

10. Méthode selon l'une quelconque des revendications précédentes, dans laquelle l'asparaginase comprend au plus 100, plus préférablement au plus 80 ou au plus 50, plus préférablement au plus 25, au plus 20, au plus 15, au plus 10 ou au plus 5 différences d'acides aminés par rapport au polypeptide mature de l'une quelconque parmi SEQ ID n° 1 ou 2.

11. Méthode selon l'une quelconque des revendications précédentes, dans laquelle l'asparaginase possède au moins 50% d'identité de séquence par rapport au polypeptide mature de l'une quelconque parmi SEQ ID n° 1 ou 2, tel qu'au moins 60%, au moins 70%, au moins 80%, au moins 85%, au moins 90%, au moins 91%, au moins 92%, au moins 93%, au moins 94%, au moins 95%, au moins 96%, au moins 97%, au moins 98%, ou au moins 99%, d'identité de séquence par rapport au polypeptide mature de l'une quelconque parmi SEQ ID n° 1 ou 2.

12. Méthode selon l'une quelconque des revendications précédentes, dans laquelle l'asparaginase est une asparaginase thermostable.


### SEQUENCE LISTING

<110> Novozymes A/S
<120> METHOD FOR PRODUCING ROASTED COFFEE BEANS
<130> 12673-WO-PCT
<160> 2
<170> PatentIn version 3.5
<210> 1
   <211> 378
   <212> PRT
   <213> Aspergillus oryzae
<400> 1
   Met Gly Val Asn Phe Lys Val Leu Ala Leu Ser Ala Leu Ala Thr Ile
   1               5                   10                  15
   Ser His Ala Ser Pro Leu Leu Tyr Pro Arg Ala Thr Asp Ser Asn Val
               20                  25                  30
   Thr Tyr Val Phe Thr Asn Pro Asn Gly Leu Asn Phe Thr Gln Met Asn
           35                  40                  45
   Thr Thr Leu Pro Asn Val Thr Ile Phe Ala Thr Gly Gly Thr Ile Ala
       50                  55                  60
   Gly Ser Ser Ala Asp Asn Thr Ala Thr Thr Gly Tyr Lys Ala Gly Ala
   65                  70                  75                  80
   Val Gly Ile Gln Thr Leu Ile Asp Ala Val Pro Glu Met Leu Asn Val
                   85                  90                  95
   Ala Asn Val Ala Gly Val Gln Val Thr Asn Val Gly Ser Pro Asp Ile
               100                 105                 110
   Thr Ser Asp Ile Leu Leu Arg Leu Ser Lys Gln Ile Asn Glu Val Val
           115                 120                 125
   Cys Asn Asp Pro Thr Met Ala Gly Ala Val Val Thr His Gly Thr Asp
       130                 135                 140
   Thr Leu Glu Glu Ser Ala Phe Phe Leu Asp Ala Thr Val Asn Cys Arg
   145                 150                 155                 160
   Lys Pro Val Val Ile Val Gly Ala Met Arg Pro Ser Thr Ala Ile Ser
                   165                 170                 175
   Ala Asp Gly Pro Leu Asn Leu Leu Gln Ser Val Thr Val Ala Ala Ser
               180                 185                 190
   Pro Lys Ala Arg Asp Arg Gly Ala Leu Ile Val Met Asn Asp Arg Ile
           195                 200                 205
   Val Ser Ala Phe Tyr Ala Ser Lys Thr Asn Ala Asn Thr Val Asp Thr
       210                 215                 220
   Phe Lys Ala Ile Glu Met Gly Asn Leu Gly Glu Val Val Ser Asn Lys
   225                 230                 235                 240
   Pro Tyr Phe Phe Tyr Pro Pro Val Lys Pro Thr Gly Lys Thr Glu Val
                   245                 250                 255
   Asp Ile Arg Asn Ile Thr Ser Ile Pro Arg Val Asp Ile Leu Tyr Ser
               260                 265                 270
   Tyr Glu Asp Met His Asn Asp Thr Leu Tyr Ser Ala Ile Asp Asn Gly
           275                 280                 285
   Ala Lys Gly Ile Val Ile Ala Gly Ser Gly Ser Gly Ser Val Ser Thr
       290                 295                 300
   Pro Phe Ser Ala Ala Met Glu Asp Ile Thr Thr Lys His Asn Ile Pro
   305                 310                 315                 320
   Ile Val Ala Ser Thr Arg Thr Gly Asn Gly Glu Val Pro Ser Ser Ala
                   325                 330                 335
   Glu Ser Ser Gln Ile Ala Ser Gly Tyr Leu Asn Pro Ala Lys Ser Arg
               340                 345                 350
   Val Leu Leu Gly Leu Leu Leu Ala Gln Gly Lys Ser Ile Glu Glu Met
           355                 360                 365
   Arg Ala Val Phe Glu Arg Ile Gly Val Ala
       370                 375
<210> 2
   <211> 378
   <212> PRT
   <213> Aspergillus niger
<400> 2
   Met Pro Leu Lys Pro Ile Leu Leu Ser Ala Leu Ala Ser Leu Ala Ser
   1               5                   10                  15
   Ala Ser Pro Leu Leu Tyr Ser Arg Thr Thr Asn Glu Thr Phe Val Phe
               20                  25                  30
   Thr Asn Ala Asn Gly Leu Asn Phe Thr Gln Met Asn Thr Thr Leu Pro
           35                  40                  45
   Asn Val Thr Ile Phe Ala Thr Gly Gly Thr Ile Ala Gly Ser Asp Ser
       50                  55                  60
   Ser Ser Thr Ala Thr Thr Gly Tyr Thr Ser Gly Ala Val Gly Val Leu
   65                  70                  75                  80
   Ser Leu Ile Asp Ala Val Pro Ser Met Leu Asp Val Ala Asn Val Ala
                   85                  90                  95
   Gly Val Gln Val Ala Asn Val Gly Ser Glu Asp Ile Thr Ser Asp Ile
               100                 105                 110
   Leu Ile Ser Met Ser Lys Lys Leu Asn Arg Val Val Cys Glu Asp Pro
           115                 120                 125
   Thr Met Ala Gly Ala Val Ile Thr His Gly Thr Asp Thr Leu Glu Glu
       130                 135                 140
   Thr Ala Phe Phe Leu Asp Ala Thr Val Asn Cys Gly Lys Pro Ile Val
   145                 150                 155                 160
   Ile Val Gly Ala Met Arg Pro Ser Thr Ala Ile Ser Ala Asp Gly Pro
                   165                 170                 175
   Phe Asn Leu Leu Glu Ala Val Thr Val Ala Ala Ser Thr Ser Ala Arg
               180                 185                 190
   Asp Arg Gly Ala Met Val Val Met Asn Asp Arg Ile Ala Ser Ala Tyr
           195                 200                 205
   Tyr Val Thr Lys Thr Asn Ala Asn Thr Met Asp Thr Phe Lys Ala Met
       210                 215                 220
   Glu Met Gly Tyr Leu Gly Glu Met Ile Ser Asn Thr Pro Phe Phe Phe
   225                 230                 235                 240
   Tyr Pro Pro Val Lys Pro Thr Gly Lys Val Ala Phe Asp Ile Thr Asn
                   245                 250                 255
   Val Thr Glu Ile Pro Arg Val Asp Ile Leu Phe Ser Tyr Glu Asp Met
               260                 265                 270
   His Asn Asp Thr Leu Tyr Asn Ala Ile Ser Ser Gly Ala Gln Gly Ile
           275                 280                 285
   Val Ile Ala Gly Ala Gly Ala Gly Gly Val Thr Thr Ser Phe Asn Glu
       290                 295                 300
   Ala Ile Glu Asp Val Ile Asn Arg Leu Glu Ile Pro Val Val Gln Ser
   305                 310                 315                 320
   Met Arg Thr Val Asn Gly Glu Val Pro Leu Ser Asp Val Ser Ser Asp
                   325                 330                 335
   Thr Ala Thr His Ile Ala Ser Gly Tyr Leu Asn Pro Gln Lys Ser Arg
               340                 345                 350
   Ile Leu Leu Gly Leu Leu Leu Ser Gln Gly Lys Asn Ile Thr Glu Ile
           355                 360                 365
   Ala Asp Val Phe Ala Leu Gly Thr Asp Ala
       370                 375